# FASCICULE DE BREVET EUROPEEN

(11) **EP 3 785 382 B1**
(45) Date de publication et mention de la délivrance du brevet: **30.03.2022**
(21) Numéro de dépôt: 19720985.1
(22) Date de dépôt: 08.04.2019
(51) Int. Cl.: H04B 10/70, H04L 9/08

(54) **DISPOSITIF DE TRAITEMENT RECONFIGURABLE POUR LES COMMUNICATIONS QUANTIQUES**
REKONFIGURIERBARE VERARBEITUNGSVORRICHTUNG FÜR QUANTENKOMMUNIKATION
RECONFIGURABLE PROCESSING DEVICE FOR QUANTUM COMMUNICATIONS

(30) Priorité: 24.04.2018 FR 1853595
(43) Date de publication de la demande: 03.03.2021
(73) Titulaire: VeriQloud, 92120 Montrouge (FR)
(72) Inventeur: KAPLAN, Marc, 92120 Montrouge (FR)
(74) Mandataire: Novagraaf Technologies
(86) Numéro de dépôt international: PCT/FR2019/050814
(87) Numéro de publication internationale: WO 2019/207228

(56) Documents cités:
- WO-A1-95/10907
- WO-A1-2012/044149

## Description

### Domaine technique

L'invention concerne les dispositifs qui sont chargés de traiter des photons et des signaux électriques pendant des communications quantiques.

### Etat de l'art

Comme le sait l'homme de l'art, les communications quantiques sont des communications dans lesquelles on utilise des photons pour transporter des informations quantiques d'un équipement électronique vers au moins un autre équipement électronique. Lors d'un tel transport, chaque photon est placé dans un état quantique qui correspond à une unité d'information quantique (ou « qubit »), notée |0〉 ou |1〉, ou à une superposition de deux unités d'information quantique différentes, comme par exemple 1/√2(|0〉 + |1〉) ou 1/√2(|0〉 - |1〉). En d'autres termes, on communique en encodant l'information quantique dans les propriétés quantiques des photons, et donc une information quantique correspond à un degré de liberté d'une propriété physique décrite par la mécanique quantique. Parmi les propriétés quantiques des photons utilisables pour des communications quantiques on peut notamment citer la phase, la localisation temporelle, la polarisation ou la fréquence.

Les communications quantiques peuvent comporter une ou plusieurs procédures types, parmi lesquelles on peut notamment citer une procédure de type « préparer et mesurer », une procédure de type « préparer et envoyer », une procédure de type « recevoir et mesurer », et une procédure de type « recevoir et envoyer ».

La procédure de type « préparer et mesurer » consiste à générer (ou créer) à partir d'un signal électrique au moins un photon ayant un premier état quantique fixe, puis à transformer ce premier état quantique en un second état quantique (éventuellement égal au premier) définissant une information quantique à partir d'un autre signal électrique, puis à mesurer ce second état quantique (pour déterminer l'information quantique transportée). Cette procédure permet en général de tirer partie du hasard inhérent à la mesure quantique afin de créer des séquences de nombres aléatoires. La mise en œuvre d'une telle procédure nécessite un premier dispositif de traitement comprenant un encodeur générant un photon ayant un premier état quantique fixe (dépendant du matériel utilisé) à partir d'un signal électrique reçu, un transformateur transformant le premier état quantique d'un photon en un second état quantique, et un décodeur transformant le second état quantique d'un photon reçu en un signal électrique utilisable par un équipement (distant ou non).

La procédure de type « préparer et envoyer » consiste à générer à partir d'un signal électrique un photon ayant un premier état quantique fixé par le matériel utilisé, puis à transformer à partir d'un signal électrique ce premier état quantique en un second état quantique (éventuellement égal au premier) définissant une information quantique, puis à transmettre le photon ayant ce second état quantique sur un canal de communication quantique. On notera que la subdivision en la génération d'un photon et la transformation d'état est une contrainte technique que l'on s'impose afin d'obtenir une universalité. Cette procédure peut, par exemple, être utilisée pour émettre les informations nécessaires à l'établissement d'une clé partagée avec au moins un équipement distant. La mise en œuvre d'une telle procédure nécessite un deuxième dispositif de traitement comprenant les encodeur et transformateur précités et une interface de sortie délivrant les photons ayant des seconds états quantiques à transmettre.

La procédure de type « recevoir et mesurer » consiste à recevoir un photon ayant un premier état quantique, puis à transformer ce premier état quantique en un second état quantique (éventuellement égal au premier) définissant une information quantique, puis à mesurer ce second état quantique (pour déterminer l'information quantique transportée). Cette procédure peut, par exemple, être utilisée pour recevoir les informations nécessaires à l'établissement d'une clé partagée avec un équipement distant. La mise en œuvre d'une telle procédure nécessite un troisième dispositif de traitement comprenant une interface d'entrée recevant des photons ayant des premiers états quantiques, et les transformateur et décodeur précités.

La procédure de type « recevoir et envoyer » consiste à recevoir un photon ayant un premier état quantique, puis à transformer ce premier état quantique en un second état quantique (éventuellement égal au premier) définissant une information quantique, puis à transmettre le photon ayant ce second état quantique sur un canal de communication quantique. Cette procédure peut, par exemple, être utilisée par des protocoles de cryptographie quantique avancés, par exemple lorsque l'on doit faire plusieurs allers-retours consécutifs entre équipements ou lorsqu'il y a plus de deux équipements participants. La mise en œuvre d'une telle procédure nécessite un quatrième dispositif de traitement comprenant les interfaces d'entrée, transformateurs et interfaces de sortie précités.

Actuellement, un équipement est généralement impliqué dans une seule des procédures décrites ci-avant, et donc ne peut pas être impliqué dans les autres procédures. Parfois, lorsqu'un équipement doit être impliqué dans deux des procédures précitées, il doit comprendre en parallèle deux dispositifs de traitement différents adaptés respectivement à ces deux procédures, ce qui est non seulement onéreux mais également encombrant, et nécessite un microcontrôleur complexe. Il n'existe pas d'équipement impliqué dans les quatre procédures précitées.

### Résumé de l'invention

L'invention a notamment pour but d'améliorer la situation.

Elle propose notamment à cet effet un dispositif de traitement comprenant :
- une interface d'entrée configurée pour recevoir des photons ayant des premiers états quantiques,
- un encodeur configuré pour générer un photon ayant un premier état quantique fixe (dépendant du matériel utilisé) à partir d'un signal électrique reçu,
- un transformateur configuré pour transformer le premier état quantique d'un photon en un second état quantique,
- un décodeur configuré pour transformer le second état quantique d'un photon reçu en un signal électrique, et
- une interface de sortie configuré pour délivrer des photons ayant des seconds états quantiques et à transmettre.

Ce dispositif de traitement se caractérise par le fait qu'il comprend également un aiguilleur comprenant au moins trois entrées connectées respectivement à des sorties de ces interface d'entrée, encodeur et transformateur, et au moins trois sorties connectées respectivement à des entrées de ces interface de sortie, décodeur et transformateur, et couplant sélectivement au moins l'une de ses entrées à l'une de ses sorties en fonction d'une commande reçue.

Ainsi, on dispose d'un unique dispositif de traitement qui peut assurer toutes les procédures mentionnées dans la partie introductive selon la configuration dans laquelle il est temporairement placé (par exemple par un microcontrôleur).

Le dispositif selon l'invention peut comporter d'autres caractéristiques qui peuvent être prises séparément ou en combinaison, et notamment :
- son encodeur peut comprendre un laser configuré pour générer des photons et un modulateur configuré pour agir sur les photons générés afin de moduler leur amplitude ;
   > son encodeur peut être configuré pour générer chaque photon ayant un premier état quantique fixe (dépendant du matériel utilisé) à partir d'un signal électrique reçu pendant un intervalle de temps d'une durée prédéfinie et subdivisé en des premier et second sous-intervalles de durées prédéfinies. Dans ce cas, le modulateur peut être configuré pour imposer une amplitude de modulation nulle pendant toute la durée de chaque intervalle de temps hormis pendant des premier et second instants prédéfinis appartenant respectivement aux premier et second sous-intervalles et durant lesquels l'amplitude de modulation est choisie de sorte que l'on obtienne une amplitude moyenne sur tout l'intervalle de temps correspondant à la génération d'un unique photon ayant un premier état quantique ;
   > le modulateur peut être associé à un atténuateur optique ;
- son transformateur peut comprendre un modulateur de phase configuré pour transformer une phase associée au premier état quantique d'un photon en une autre phase associée au second état quantique du même photon ;
   ➢ le modulateur de phase peut être configuré pour induire, entre les premier et second sous-intervalles de temps prédéfinis, au moins une différence de phase nulle pour un second état quantique correspondant à une première unité d'information quantique (ou qubit) |0〉, ou au moins une différence de phase égale à π pour un second état quantique correspondant à une seconde unité d'information quantique (ou qubit) |1〉 ;
- son décodeur peut comprendre un interféromètre configuré pour recevoir chaque photon ayant le second état quantique et comprenant deux entrées et deux sorties et agencé de sorte que la sortie d'un photon soit déterminée par la différence de phase entre les deux entrées, et un détecteur de photon unique couplé à au moins l'une des deux sorties de l'interféromètre ;
   > l'interféromètre peut comprendre des premier et deuxième séparateurs de faisceaux optiques couplés entre eux par des première et seconde fibres optiques ayant respectivement des première et seconde longueurs différentes ;
   - la différence entre les première et seconde longueurs peut être égale à une distance parcourue par un photon pendant la durée prédéfinie d'un intervalle de temps ;
   - l'interféromètre peut être couplé au détecteur de photon unique par l'intermédiaire d'un troisième séparateur de faisceaux optiques relié à l'interféromètre par des troisième et quatrième fibres optiques ayant respectivement des troisième et quatrième longueurs différentes et configurées pour délivrer une combinaison de signaux optiques délivrés sur les deux sorties du deuxième séparateur de faisceaux optiques de l'interféromètre;
      o la différence entre les troisième et quatrième longueurs peut être égale à une distance parcourue par un photon pendant la durée prédéfinie d'un sous-intervalle de temps.

L'invention propose également un procédé de configuration comprenant une étape dans laquelle on configure un dispositif de traitement du type de celui présenté ci-avant de sorte que :
- soit la sortie de son encodeur soit couplée à l'entrée de son transformateur et la sortie de ce dernier soit couplée à l'entrée de son décodeur, pour qu'il réalise une procédure de type préparer et mesurer,
- soit la sortie de son encodeur soit couplée à l'entrée de son transformateur et la sortie de ce dernier soit couplée à l'entrée de son interface de sortie, pour qu'il réalise une procédure de type préparer et envoyer,
- soit la sortie de son interface d'entrée soit couplée à l'entrée de son transformateur et la sortie de ce dernier soit couplée à l'entrée de son décodeur, pour qu'il réalise une procédure de type recevoir et mesurer,
- soit la sortie de son interface d'entrée soit couplée à l'entrée de son transformateur et la sortie de ce dernier soit couplée à l'entrée de son interface de sortie, pour qu'il réalise une procédure de type recevoir et envoyer.

L'invention propose également un procédé destiné à distribuer une clé quantique et comprenant :
- une première étape dans laquelle i) on configure un dispositif de traitement du type de celui présenté ci-avant de sorte que son aiguilleur couple son encodeur à l'entrée de son transformateur et la sortie de ce dernier à l'entrée de son décodeur, ii) on configure l'encodeur de sorte qu'il délivre 2N photons ayant des premiers états correspondant respectivement à 2N unités d'information quantique, iii) on configure le transformateur de sorte qu'il transforme le premier état de chaque photon, reçu de l'encodeur via l'aiguilleur, en un second état quantique résultant d'une superposition uniforme de première |0〉 et seconde |1〉 unités d'information quantique correspondant à une différence de phase de π/2, et iv) on détermine avec le décodeur, avec les 2N photons reçus du transformateur via l'aiguilleur, une séquence de 2N signaux électriques correspondant chacun à une valeur choisie parmi 0 et 1, cette séquence étant subdivisée en deux sous-séquences de N signaux électriques notés respectivement xi et yi (avec i = 1 à N), et
- une seconde étape dans laquelle i) on configure le dispositif de traitement de sorte que son aiguilleur couple la sortie de son encodeur à l'entrée de son transformateur et la sortie de ce dernier à l'entrée de son interface de sortie, ii) on alimente l'encodeur avec N signaux électriques afin qu'il génère à partir de ces N signaux électriques une séquence de N photons ayant chacun un premier état quantique fixe, et on alimente le transformateur avec les deux sous-séquences xi et yi de sorte qu'il transforme le premier état quantique de chacun des N photons, reçus de l'encodeur via l'aiguilleur, en un second état quantique défini par une superposition des première |0〉 et seconde |1〉 unités d'information quantique correspondant à une différence de phase qui est fonction des valeurs de ces xi et yi, en vue de sa transmission par l'interface de sortie.

Par exemple, dans sa seconde étape on peut alimenter l'encodeur avec les deux sous-séquences de N signaux électriques afin qu'il génère à partir de chaque paire (i) de signaux électriques xi et yi un photon ayant un premier état quantique correspondant soit à la première unité d'information quantique |0〉 correspondant à une différence de phase de 0 en présence de deux signaux électriques xi=0 et yi=0, soit à la seconde unité d'information quantique |1〉 correspondant à une différence de phase de π en présence de deux signaux électriques xi=0 et yi=1, soit à une superposition uniforme des première |0〉 et seconde |1〉 unités d'information quantique correspondant à une différence de phase de +π/2 en présence de deux signaux électriques xi=1 et yi=0, soit encore à une autre superposition uniforme des première |0〉 et seconde |1〉 unités d'information quantique correspondant à une différence de phase de -π/2 en présence de deux signaux électriques xi=1 et yi=1.

### Brève description des figures

D'autres caractéristiques et avantages de l'invention apparaîtront à l'examen de la description détaillée ci-après, et des dessins annexés, sur lesquels :
- la figure 1 illustre de façon schématique et fonctionnelle un premier exemple de réalisation d'un dispositif de traitement selon l'invention placé dans une première configuration,
- la figure 2 illustre de façon schématique et fonctionnelle le dispositif de traitement de la figure 1 placé dans une deuxième configuration,
- la figure 3 illustre de façon schématique et fonctionnelle le dispositif de traitement de la figure 1 placé dans une troisième configuration,
- la figure 4 illustre de façon schématique et fonctionnelle le dispositif de traitement de la figure 1 placé dans une quatrième configuration,
- la figure 5 illustre de façon schématique et fonctionnelle un exemple de réalisation d'un décodeur d'un dispositif de traitement selon l'invention, et
- la figure 6 illustre de façon schématique et fonctionnelle un second exemple de réalisation d'un dispositif de traitement selon l'invention placé dans une première configuration.

### Description détaillée d'exemples de réalisation

L'invention a notamment pour but de proposer un dispositif de traitement 1 configurable en fonction des besoins et chargé de traiter des photons et des signaux électriques pendant des communications quantiques.

Dans ce qui suit, on considère à titre d'exemple non limitatif que le dispositif de traitement 1 est destiné à faire partie d'un réseau de communication quantique comprenant par exemple des ordinateurs quantiques. Mais l'invention n'est pas limitée à cette application. En effet, le dispositif de traitement 1 peut faire partie, ou être couplé à, de nombreux équipements d'un réseau de communication comprenant au moins une portion quantique, et notamment à un ou plusieurs ordinateurs classiques ou à d'autres équipements chargés de transférer de l'information quantique encodée dans des photons.

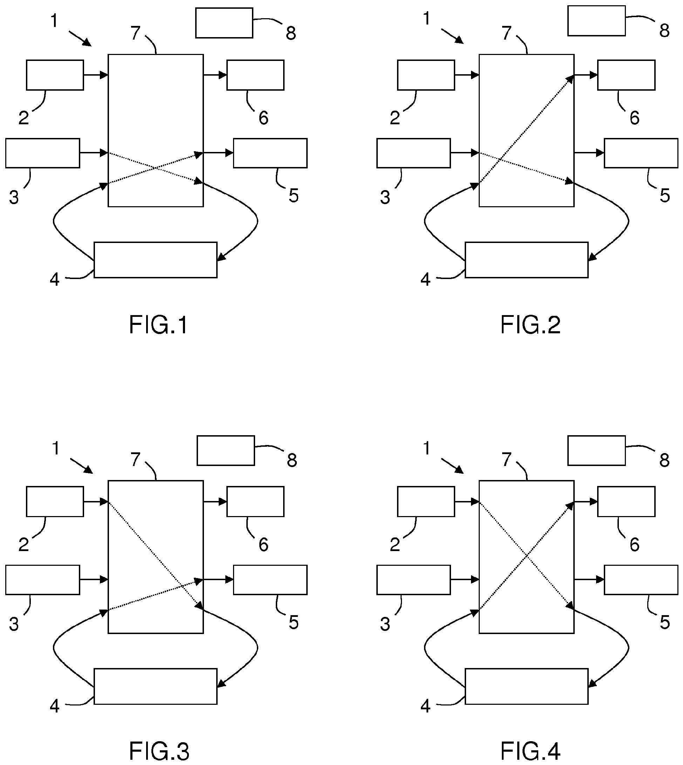

On a schématiquement représenté sur les figures 1 à 4 un exemple de réalisation non limitatif d'un dispositif de traitement 1 selon l'invention (placé dans quatre configurations différentes).

Comme illustré, un dispositif de traitement 1, selon l'invention, comprend au moins une interface d'entrée 2, un encodeur 3, un transformateur 4, un décodeur 5, une interface de sortie 6 et un aiguilleur 7.

L'interface d'entrée 2 est agencée de manière à recevoir des photons ayant des premiers états quantiques. Pour ce faire, elle est, par exemple, connectée à une fibre optique d'un réseau de communication ou à un dispositif permettant de convertir la mémoire d'un ordinateur quantique en propriété quantique d'un photon. Par ailleurs, la sortie de cette interface d'entrée 2 est couplée à une entrée de l'aiguilleur 7.

Il est rappelé qu'un état quantique correspond à une unité d'information quantique (ou qubit), notée |0〉 ou |1〉, ou à une superposition de deux unités d'information quantique différentes, comme par exemple 1/√2(|0〉 + |1〉) ou 1/√2(|0〉 - |1〉).

On notera que cette interface d'entrée 2 peut éventuellement comprendre plusieurs (au moins deux) entrées sélectionnables et/ou plusieurs (au moins deux) sorties sélectionnables.

L'encodeur 3 est agencé de manière à générer un photon ayant un premier état quantique fixe à partir d'un signal électrique reçu. Ce premier état quantique peut, par exemple, être fixé par le matériel utilisé. La sortie de cet encodeur 3 est couplée à une entrée de l'aiguilleur 7.

Par exemple cet encodeur 3 peut comprendre un laser générant des photons, et un modulateur agissant sur les photons générés par le laser afin de moduler leur amplitude. A titre d'exemple, le laser peut générer des photons ayant une longueur d'onde égale à 1550 nm et une énergie d'environ 0,8 eV. Un tel laser peut, par exemple, être de type dit « à onde entretenue ».

L'encodeur 3 peut, par exemple, générer un photon ayant un premier état quantique fixe à partir d'un signal électrique reçu pendant un intervalle de temps IT d'une durée prédéfinie dpt et subdivisé en des premier SI1 et second SI2 sous-intervalles de durées prédéfinies respectives dp1 et dp2, soit dpt = dp1 + dp2. De préférence, dp1 = dp2, mais cela n'est pas obligatoire. Le modulateur impose alors une amplitude de modulation nulle pendant toute la durée dpt de chaque intervalle de temps IT hormis pendant des premier ip1 et second ip2 instants prédéfinis appartenant respectivement aux premier SI1 et second SI2 sous-intervalles. Durant ces premier ip1 et second ip2 instants l'amplitude de modulation est choisie (non nulle) de sorte que l'on obtienne une amplitude moyenne sur tout l'intervalle de temps IT qui correspond à la génération d'un unique photon ayant un premier état quantique fixe. Le microcontrôleur 8 précité est donc chargé d'allumer et d'éteindre le laser, et de fournir au modulateur d'amplitude le signal électrique permettant d'obtenir l'amplitude adéquate pendant les premier ip1 et second ip2 instants de chaque intervalle de temps IT.

Par exemple, la durée dpt de chaque intervalle de temps IT peut être égale à 20 ns, et les durées dp1 et dp2 des premier SI1 et second SI2 sous-intervalles peuvent être égales à 10 ns. Si un intervalle de temps IT débute à un instant t0, les premier ip1 et second ip2 instants prédéfinis peuvent, par exemple, survenir respectivement à t0 + 5 ns et t0 + 15 ns. Egalement par exemple, la durée de chacun des premier ip1 et second ip2 instants peut, par exemple, être égale 100 ps. Dans ce cas, l'amplitude du signal optique est non nulle pendant les 100 ps de durée de chacun des premier ip1 et second ip2 instants, et cette amplitude est choisie de sorte que l'amplitude moyenne sur les 20 ns de durée de l'intervalle de temps IT concerné ne produise qu'un seul photon (ici d'une énergie d'environ 0,8 eV). On comprendra que chaque photon est ainsi localisé temporellement dans un intervalle de temps IT par superposition de « contributions » (ou signaux optiques) compris(es) dans les premier SI1 et second SI2 sous-intervalles.

A titre d'exemple le modulateur de l'encodeur 3 peut être associé à un atténuateur optique (ou atténuateur de signal optique). Cela permet en effet de réduire la puissance optique du signal optique issu du laser, car plus la puissance optique reçue par le modulateur est petite, plus la modulation est facile à réaliser.

Le transformateur 4 est agencé de manière à transformer le premier état quantique fixe d'un photon en un second état quantique. L'entrée de ce transformateur 4 est couplée à une sortie de l'aiguilleur 7, et la sortie de ce transformateur 4 est couplée à une entrée de l'aiguilleur 7.

Le choix de ce second état quantique peut, par exemple, être fait par un microcontrôleur qui fait éventuellement partie du dispositif 1. Ce choix est défini par un signal électrique qui est communiqué au transformateur 4.

Par exemple, ce transformateur 4 peut comprendre un modulateur de phase agencé de manière à transformer la phase qui est associée au premier état quantique fixe d'un photon reçu en une autre phase qui est associée au second état quantique. On notera que dans certains cas les premier et second états quantiques peuvent être identiques et dans ce cas la phase du photon est inchangée par le transformateur 4.

Le modulateur de phase peut, par exemple, induire, entre les premier SI1 et second SI2 sous-intervalles de temps prédéfinis, au moins une différence de phase nulle (0) pour un second état quantique qui correspond à une première unité d'information quantique (ou qubit) |0〉, ou au moins une différence de phase égale à π pour un second état quantique qui correspond à une seconde unité d'information quantique (ou qubit) |1〉. Il peut être également agencé de manière à induire au moins une différence de phase différente de 0 et de π en cas de superpositions des première |0〉 et seconde |1〉 unités d'information quantique, comme par exemple +π/2 pour 1/√2(|0〉 + |1〉) ou -π/2 pour 1/√2(|0〉 - |1〉).

Lorsque chaque intervalle de temps IT est subdivisé en des premier SI1 et second SI2 sous-intervalles, la différence de phase précitée est la différence entre la phase appliquée pendant le premier sous-intervalle SI1 et la phase appliquée pendant le second sous-intervalle SI2. A cet effet, on peut utiliser un modulateur de phase capable de changer, éventuellement, de phase toutes les 10 ns.

Il est important de noter que la phase s'entend relativement à la phase du signal à l'instant t0 (pour le premier sous-intervalle SI1) et à l'instant t0+dp1 (pour le second sous-intervalle SI2).

Le microcontrôleur 8 précité est chargé de fournir au modulateur de phase le signal électrique qui est nécessaire aux changements de phase demandés.

Le décodeur 5 est agencé de manière à transformer le second état quantique d'un photon reçu en un signal électrique qui est utilisable par un équipement (distant ou non). Par exemple, chaque signal électrique peut être lu et traité par un microcontrôleur qui est éventuellement le même (8) que celui qui est couplé à l'encodeur 3 et/ou au transformateur 4. L'entrée de ce décodeur 5 est couplée à une sortie de l'aiguilleur 7.

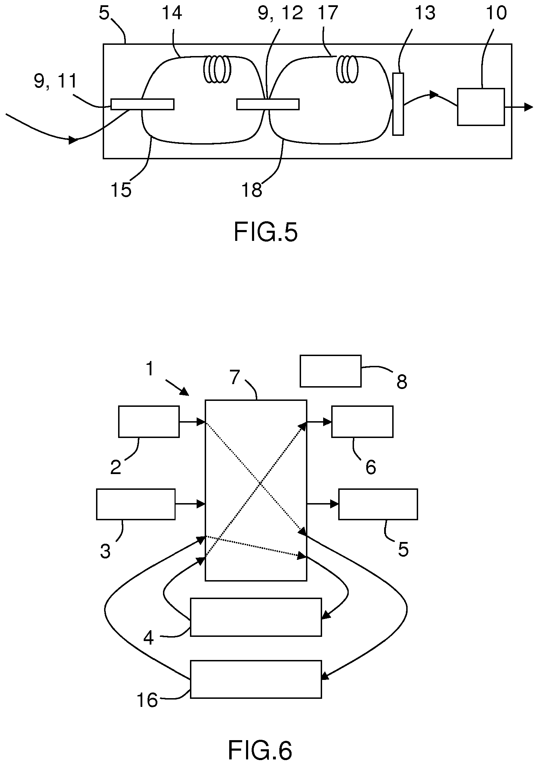

Par exemple, et comme illustré non limitativement sur la figure 5, ce décodeur 5 peut comprendre un interféromètre 9 qui reçoit chaque photon ayant un second état quantique et qui comprend deux entrées et deux sorties et est agencé de sorte que la sortie d'un photon soit déterminée par la différence de phase entre ces deux entrées, et au moins un détecteur de photon unique 10 couplé à au moins l'une des deux sorties de cet interféromètre 9.

Egalement comme illustré non limitativement sur la figure 5, cet interféromètre 9 peut comprendre des premier 11 et deuxième 12 séparateurs de faisceaux optiques couplés entre eux par des première 14 et seconde 15 fibres optiques. Le premier séparateur de faisceaux optiques 11 comprend une « entrée », et deux « sorties » connectées respectivement aux première 14 et seconde 15 fibres optiques. Le deuxième séparateur de faisceaux optiques 12 comprend deux « entrées » connectées respectivement aux première 14 et seconde 15 fibres optiques, et deux « sorties ».

Les première 14 et seconde 15 fibres optiques ont respectivement des première l1 et seconde l2 longueurs différentes.

Par exemple, le premier séparateur de faisceaux optiques 11 peut être un miroir semi-réfléchissant. De même, le deuxième séparateur de faisceaux optiques 12 peut être un miroir semi-réfléchissant.

L'interféromètre 9 constitue une variante d'un interféromètre de Mach-Zehnder qui fonctionne même avec un photon unique.

De préférence, la différence entre les première l1 et seconde l2 longueurs est égale à la distance qui est parcourue par un photon dans une fibre optique 14 ou 15 pendant la durée prédéfinie dp1 d'un sous-intervalle de temps SI1. Typiquement, lorsque la durée prédéfinie dp1 est égale à 20 ns, la différence entre les première l1 et seconde l2 longueurs est égale à environ 4 m.

Comme illustré non limitativement sur la figure 5, l'interféromètre 9 peut être couplé au détecteur de photon unique 10 par l'intermédiaire d'un troisième séparateur de faisceaux optiques 13. Ce dernier (13) est alors relié à l'interféromètre 9 (et plus précisément aux deux sorties du deuxième séparateur de faisceaux optiques 12) par des troisième 17 et quatrième 18 fibres optiques ayant respectivement des troisième et quatrième longueurs différentes, respectivement l3 et l4. Ce troisième séparateur de faisceaux optiques 13 comprend une sortie couplée à une entrée du détecteur 10 et délivrant une combinaison des signaux optiques qui sont délivrés sur les deux sorties du deuxième séparateur de faisceaux optiques 12 de l'interféromètre 9. De préférence, la différence entre ces troisième l3 et quatrième l4 longueurs est égale à la distance qui est parcourue par un photon pendant la durée prédéfinie dp1 d'un sous-intervalle de temps SI1.

Par exemple, le troisième séparateur de faisceaux optiques 13 peut être un miroir semi-réfléchissant.

Avec l'agencement illustré et décrit, le premier séparateur de faisceaux optiques 11 superpose le photon entrant sur les première 14 et seconde 15 fibres optiques et le deuxième séparateur de faisceaux optiques 12 réalise l'interférence entre les deux superpositions de l'unique photon. Les signaux optiques présents sur les deux sorties du deuxième séparateur de faisceaux optiques 12 sont ensuite recombinés grâce au troisième séparateur de faisceaux optiques 13. Au final, si la phase est la même dans les premier SI1 et second SI2 sous-intervalles de l'intervalle de temps IT considéré, alors en sortie de l'interféromètre 9 le photon est localisé dans le premier sous-intervalle SI1. En revanche, si la phase diffère de π entre les premier SI1 et second SI2 sous-intervalles de l'intervalle de temps IT considéré, alors en sortie de l'interféromètre 9 le photon est localisé dans le second sous-intervalle SI2. Le détecteur de photon unique 10, situé en sortie de l'interféromètre va détecter l'intervalle de temps IT dans lequel se trouve le photon sortant de l'interféromètre 9 et assigner la valeur 0 à ce photon s'il est localisé dans le premier sous-intervalle SI1 et la valeur 1 à ce photon s'il est localisé dans le second sous-intervalle SI2, par exemple. Le microcontrôleur 8 récupère alors les données du détecteur de photon unique 10 afin d'assigner à chaque intervalle de temps IT la valeur 0 ou la valeur 1.

Dans une variante de réalisation, en l'absence de troisième séparateur de faisceaux optiques 13 on peut coupler un détecteur de photon unique 10 sur chacune des deux sorties du deuxième séparateur de faisceaux optiques 12, et on détecte ainsi si le photon a pris la première ou la seconde sortie. On transforme ainsi une différence de phase en une différence de position. Cela est particulièrement simple, mais cela nécessite l'utilisation de deux détecteurs de photon unique ou bien (en variante) d'un détecteur à deux entrées.

On notera que le détecteur de photon unique n'a qu'un seul rôle, à savoir émettre un signal électrique au moment où il détecte un photon.

L'interface de sortie 6 est agencée de manière à délivrer des photons ayant des seconds états quantiques et qui doivent être transmis, par exemple sur une fibre optique d'un réseau de communication ou un circuit permettant de transférer l'état du photon à la mémoire d'un ordinateur quantique. L'entrée de cette interface de sortie 6 est couplée à une sortie de l'aiguilleur 7.

L'aiguilleur 7 comprend au moins trois entrées connectées respectivement aux sorties des interface d'entrée 2, encodeur 3 et transformateur 4, et au moins trois sorties connectées respectivement aux entrées des interface de sortie 6, décodeur 5 et transformateur 4, et est agencé de manière à coupler sélectivement au moins l'une de ses entrées à l'une de ses sorties en fonction d'une commande reçue. Par exemple, cette commande peut provenir d'un microcontrôleur qui est éventuellement le même (8) que celui qui est couplé à l'encodeur 3 et/ou au transformateur 4 et/ou au décodeur 5.

A titre d'exemples non limitatifs, l'aiguilleur 7 pourra être celui qui est fabriqué par SERCALO sous la référence SL8x8 ("latching fiber optic NxM matrix switch") ou par DiCon Fiberoptics sous la référence scd0129 ("MEMS Modular Single-Mode Matrix Optical Switch").

On dispose ainsi d'un unique dispositif de traitement 1 qui peut très avantageusement assurer au moins toutes les procédures mentionnées dans la partie introductive selon la configuration dans laquelle il est temporairement placé, par exemple par le microcontrôleur 8. Il est rappelé que les procédures précédemment mentionnées sont la procédure de type « préparer et mesurer », la procédure de type « préparer et envoyer », la procédure de type « recevoir et mesurer », et la procédure de type « recevoir et envoyer ».

Sur la figure 1 se trouve illustré un exemple de dispositif de traitement 1 placé dans une première configuration dédiée à la procédure de type « préparer et mesurer ». Ici, l'aiguilleur 7 couple la sortie de l'encodeur 3 à l'entrée du transformateur 4 et la sortie du transformateur 4 à l'entrée du décodeur 5. Ainsi, l'encodeur 3 génère un photon ayant un premier état quantique fixe à partir de chaque signal électrique reçu, le transformateur 4 transforme le premier état quantique d'un photon issu de l'encodeur 3 en un second état quantique, et le décodeur 5 transforme le second état quantique d'un photon issu du transformateur 4 en un signal électrique utilisable par un équipement (distant ou non). Cette procédure peut, par exemple, être utilisée pour créer des séquences de nombres aléatoires.

Sur la figure 2 se trouve illustré le même exemple de dispositif de traitement 1 que celui de la figure 1, mais cette fois placé dans une deuxième configuration dédiée à la procédure de type « préparer et envoyer ». Ici, l'aiguilleur 7 couple la sortie de l'encodeur 3 à l'entrée du transformateur 4 et la sortie du transformateur 4 à l'entrée de l'interface de sortie 6. Ainsi, l'encodeur 3 génère un photon ayant un premier état quantique fixe à partir de chaque signal électrique reçu, le transformateur 4 transforme le premier état quantique d'un photon issu de l'encodeur 3 en un second état quantique, et l'interface de sortie 6 délivre les photons ayant des seconds états quantiques et issus du transformateur 4 en vue de leur transmission, par exemple sur une fibre optique d'un réseau de communication ou un circuit quantique d'un ordinateur quantique. Cette procédure peut, par exemple, être utilisée pour émettre l'information nécessaire à l'établissement d'une clé quantique partagée avec au moins un équipement distant.

Sur la figure 3 se trouve illustré le même exemple de dispositif de traitement 1 que celui de la figure 1, mais cette fois placé dans une troisième configuration dédiée à la procédure de type « recevoir et mesurer ». Ici, l'aiguilleur 7 couple la sortie de l'interface d'entrée 2 à l'entrée du transformateur 4 et la sortie du transformateur 4 à l'entrée du décodeur 5. Ainsi, l'interface d'entrée 2 reçoit des photons ayant des premiers états quantiques, par exemple d'une fibre optique d'un réseau de communication ou d'un circuit quantique d'un ordinateur quantique, le transformateur 4 transforme le premier état quantique d'un photon issu de l'interface d'entrée 2 en un second état quantique, et le décodeur 5 transforme le second état quantique d'un photon issu du transformateur 4 en un signal électrique utilisable par un équipement (distant ou non). Cette procédure peut, par exemple, être utilisée pour recevoir l'information nécessaire à l'établissement d'une clé quantique partagée avec un équipement distant.

Sur la figure 4 se trouve illustré le même exemple de dispositif de traitement 1 que celui de la figure 1, mais cette fois placé dans une quatrième configuration dédiée à la procédure de type « recevoir et envoyer ». Ici, l'aiguilleur 7 couple la sortie de l'interface d'entrée 2 à l'entrée du transformateur 4 et la sortie du transformateur 4 à l'entrée de l'interface de sortie 6. Ainsi, l'interface d'entrée 2 reçoit des photons ayant des premiers états quantiques, par exemple d'une fibre optique d'un réseau de communication ou d'un circuit permettant de transférer l'état du photon à la mémoire d'un ordinateur quantique, le transformateur 4 transforme le premier état quantique d'un photon issu de l'interface d'entrée 2 en un second état quantique, et l'interface de sortie 6 délivre les photons ayant des seconds états quantiques et issus du transformateur 4 en vue de leur transmission, par exemple sur une fibre optique d'un réseau de communication ou un circuit quantique d'un circuit permettant de transférer l'état du photon à la mémoire d'un ordinateur quantique. Cette procédure peut, par exemple, être utilisée par des protocoles de cryptographie quantique avancés, par exemple lorsque la communication doit faire plusieurs allers-retours consécutifs entre équipements ou lorsqu'il y a plus de deux équipements participants.

On notera qu'un mode de réalisation de l'invention propose également un procédé de configuration comprenant une étape dans laquelle on configure le dispositif de traitement 1 de sorte que :
- soit la sortie de son encodeur 3 soit couplée à l'entrée de son transformateur 4 et la sortie de ce dernier (4) soit couplée à l'entrée de son décodeur 5, pour qu'il réalise une procédure de type « préparer et mesurer »,
- soit la sortie de son encodeur 3 soit couplée à l'entrée de son transformateur 4 et la sortie de ce dernier (4) soit couplée à l'entrée de son interface de sortie 6, pour qu'il réalise une procédure de type « préparer et envoyer »,
- soit la sortie de son interface d'entrée 2 soit couplée à l'entrée de son transformateur 4 et la sortie de ce dernier (4) soit couplée à l'entrée de son décodeur 5, pour qu'il réalise une procédure de type « recevoir et mesurer »,
- soit la sortie de son interface d'entrée 2 soit couplée à l'entrée de son transformateur 4 et la sortie de ce dernier (4) à l'entrée de son interface de sortie 6, pour qu'il réalise une procédure de type « recevoir et envoyer ».

On notera également qu'un mode de réalisation de l'invention propose aussi un procédé destiné à permettre la distribution d'une clé quantique, et comprenant des première et seconde étapes pouvant être mises en œuvre au moins par le dispositif de traitement 1 décrit ci-avant.

Dans cette première étape du procédé :
- on configure le dispositif de traitement 1 de sorte que son aiguilleur 7 couple la sortie de son encodeur 3 à l'entrée de son transformateur 4 et la sortie de ce dernier (4) à l'entrée de son décodeur 5. Le dispositif de traitement 1 est donc placé dans sa première configuration dédiée à la procédure de type « préparer et mesurer »,
- on configure l'encodeur 3 de sorte qu'il délivre 2N photons ayant des premiers états correspondant respectivement à 2N unités d'information quantique (ou qubits),
- on configure le transformateur 4 de sorte qu'il transforme le premier état de chaque photon, reçu de l'encodeur 3 via l'aiguilleur 7, en un second état quantique résultant d'une superposition uniforme des première |0〉 et seconde |1〉 unités d'information quantique qui correspond à une différence de phase de π/2 (1/√2(|0〉 + |1〉), et
- on détermine avec le décodeur 5, avec ces 2N photons reçus du transformateur 4 via l'aiguilleur 7, une séquence de 2N signaux électriques qui correspondent chacun à une valeur choisie parmi 0 et 1, cette séquence étant subdivisée en deux sous-séquences de N signaux électriques notés respectivement xi et yi, avec i = 1 à N. La première sous-séquence est donc (x1, x2, ..., xN) et la seconde sous-séquence est (y1, y2, ..., yN). La subdivision en deux sous-séquences xi et yi est, par exemple, réalisée par le microcontrôleur 8 afin que chaque paire (constituée des deux éléments i des séquences xi et yi) détermine l'état d'un photon à transmettre.

Dans la seconde étape du procédé :
- on configure le dispositif de traitement 1 de sorte que son aiguilleur 7 couple la sortie de son encodeur 3 à l'entrée de son transformateur 4 et la sortie de ce dernier (4) à l'entrée de son interface de sortie 6. Le dispositif de traitement 1 est donc placé dans sa première configuration dédiée à la procédure de type « préparer et envoyer »,
- on alimente l'encodeur 3 avec N signaux électriques afin qu'il génère à partir de ces N signaux électriques une séquence de N photons ayant chacun un premier état quantique fixe, et
- on alimente le transformateur 4 avec les deux sous-séquences de N signaux électriques (x1, x2, ..., xN) et (y1, y2, ..., yN) de sorte qu'il transforme le premier état quantique de chacun des N photons, reçus de l'encodeur 3 via l'aiguilleur 7, en un second état quantique défini par une superposition des première |0〉 et seconde |1〉 unités d'information quantique correspondant à une différence de phase qui est fonction des valeurs de ces xi et yi, en vue de la transmission de ce photon par l'interface de sortie 6.

Ainsi, on génère une séquence aléatoire de N qubits définis respectivement par les N photons transformés par le transformateur 4 et définissant une clé quantique, et on transmet cette clé quantique via l'interface de sortie 6 à un équipement (distant ou non).

Par exemple, dans la seconde étape du procédé on peut alimenter le transformateur 4 avec les deux sous-séquences de N signaux électriques (x1, x2, ..., xN) et (y1, y2, ..., yN) afin qu'il transforme à partir de chaque paire (i) de signaux électriques xi et yi un photon ayant un premier état quantique fixe en un second état quantique correspondant :
- soit à la première unité d'information quantique |0〉 correspondant à une différence de phase de 0 lorsqu'il est en présence de deux signaux électriques xi=0 et yi=0,
- soit à la seconde unité d'information quantique |1〉 correspondant à une différence de phase de π lorsqu'il est en présence de deux signaux électriques xi=0 et yi=1,
- soit à une superposition uniforme des première |0〉 et seconde |1〉 unités d'information quantique correspondant à une différence de phase de π/2 (second état 1/√2(|0〉 + |1〉) lorsqu'il est en présence de deux signaux électriques xi=1 et yi=0,
- soit encore à une autre superposition uniforme des première |0〉 et seconde |1〉 unités d'information quantique correspondant à une différence de phase de -π/2 (second état 1/√2(|0〉 -|1〉) lorsqu'il est en présence de deux signaux électriques xi=1 et yi=1.

L'encodeur 3 est informé des valeurs xi et yi, des signaux électriques dont l'encodage a donné la paire de photons à transformer, par un microcontrôleur qui est éventuellement le même (8) que celui qui est couplé au décodeur 5.

L'invention permet de mettre en œuvre d'autres procédures intervenant dans des communications quantiques. L'une de ces procédures est décrite ci-après.

Dans cette procédure, un participant (ci-après appelé Alice) agit sur l'état quantique d'un photon qui lui a été transmis en fonction de son état interne, mais également du résultat de l'exécution d'un protocole de communication numérique (par exemple selon un standard de communication tel que ISO/IEC 8802-3 ou IEEE 802.11) avec un autre participant à cette procédure (ci-après appelé Bob). On est donc ici dans le cas d'une communication mixte numérique/quantique. Lorsque la communication numérique a lieu après la communication quantique, il est nécessaire de stocker l'état quantique. L'objet de cette procédure est donc de stocker l'état quantique d'un photon sans utiliser de mémoire quantique, ce qui revient à enregistrer cet état quantique afin de le restituer à la demande.

Afin de pouvoir traiter en parallèle la communication quantique et la communication numérique, il est préférable d'adjoindre au dispositif de traitement 1 (illustré sur les figures 1 à 4) un équipement 16 introduisant un délai (ou retard) programmable. Comme illustré non limitativement sur la figure 6, cet équipement 16 comprend une entrée couplée à une sortie de l'aiguilleur 7, et une sortie couplée à une entrée de l'aiguilleur 7.

Par exemple, cet équipement 16 peut comprendre un ensemble de fibres optiques de différentes longueurs pouvant être couplées entre elles ou utilisées séparément par programmation via une interface électronique, afin de définir sélectivement la longueur totale que les photons devront parcourir. Ainsi, on peut programmer à l'avance le temps mis par un photon pour parcourir cette longueur totale de fibre optique.

Du point de vue d'Alice, pour la procédure de type « recevoir et mesurer », la séquence d'opérations effectuées est la suivante :
- Alice envoie un message numérique de test à Bob et mesure le temps t nécessaire pour recevoir sa réponse,
- Alice annonce à Bob qu'elle est prête à initier la communication quantique.

Par exemple, elle programme un délai de l'équipement 16 d'une durée égale à 1,5 t,
- Bob envoie un message quantique à Alice,
- Alice place le message quantique dans l'équipement 16 et initie la communication numérique,
- à la fin de cette communication numérique, Alice réalise la programmation du transformateur 4 via le microcontrôleur 8 qui a reçu la communication numérique,
- le message quantique est alors sorti de l'équipement 16, passe dans le transformateur 4 où il est transformé, et la procédure se poursuit par la transmission à Bob du message quantique transformé via l'interface de sortie 6 ou par la mesure du message quantique transformé par le décodeur 5.

On notera également que le stockage des photons peut être réalisé sans mémoire quantique, simplement en utilisant un délai programmable. Cela résulte du fait que la seconde étape du protocole permet de mesurer le temps t pour une ronde de communication, et donc que les qubits peuvent être stockés pour un temps par exemple égal à un multiple de t par sécurité. A titre d'exemple, cette durée de stockage peut être choisie égale à 2t par configuration.

Un exemple d'ensemble d'éléments réalisant une telle fonction de stockage de photons sans mémoire quantique est décrit dans le document brevet US 6,718,080. Un tel ensemble d'éléments est par exemple commercialisé par General Photonics sous le nom ODG et est actuellement décrit à l'adresse Internet http://www.generalphotonics.com/index.php/product/programmable-optical-delay/. Il est également commercialisé par Optivia sous le nom OTS-ODLS-I-40 en étant actuellement décrit à l'adresse Internet http://www.jencotech.com/cms/resources/optivaotsodlsi40ghz.pdf.

Les fonctions des différents éléments illustrés sur les figures peuvent être réalisées au moyen de composants électriques ou électroniques (ou « hardware ») dédiés ou capables d'exécuter des commandes et/ou instructions de modules logiciels (ou « software ») en combinaison avec des modules logiciels adaptés à cet effet.

L'homme de l'art comprendra que les différents schémas fonctionnels illustrés représentent des vues conceptuelles d'une circuiterie mettant en œuvre les principes de l'invention.

La description et les dessins illustrent seulement les principes de l'invention. Par conséquent, l'homme de l'art pourra concevoir des variantes d'agencement qui, bien que non explicitement décrites ou illustrées, mettent en œuvre les principes de l'invention telle que définie par les revendications annexées. Par ailleurs, tous les exemples qui sont ici mentionnés ont principalement un but pédagogique afin d'aider le lecteur à comprendre les principes de l'invention et les concepts constituant des contributions des inventeurs au domaine technique concerné, et ne doivent pas être ici considérés limitativement comme les seuls exemples de mise en œuvre de l'invention.

## Revendications

1. Dispositif de traitement (1) comprenant i) une interface d'entrée (2) configurée pour recevoir des photons ayant des premiers états quantiques, ii) un encodeur (3) configuré pour générer un photon ayant un premier état quantique fixe à partir d'un signal électrique reçu, iii) un transformateur (4) configuré pour transformer ledit premier état quantique d'un photon en un second état quantique, iv) un décodeur (5) configuré pour transformer ledit second état quantique d'un photon reçu en un signal électrique, et v) une interface de sortie (6) configurée pour délivrer des photons ayant des seconds états quantiques et à transmettre, ledit dispositif de traitement (1) comprenant en outre un aiguilleur (7) comprenant au moins trois entrées connectées respectivement à des sorties desdits interface d'entrée (2), encodeur (3) et transformateur (4), et au moins trois sorties connectées respectivement à des entrées desdits interface de sortie (6), décodeur (5) et transformateur (4), et couplant sélectivement au moins l'une de ses entrées à l'une de ses sorties en fonction d'une commande reçue.

2. Dispositif selon la revendication 1, dans lequel ledit encodeur (3) comprend un laser configuré pour générer des photons et un modulateur configuré pour agir sur lesdits photons générés afin de moduler leur amplitude.

3. Dispositif selon la revendication 2, dans lequel ledit encodeur (3) est configuré pour générer un photon ayant un premier état quantique fixe à partir de chaque signal électrique reçu pendant un intervalle de temps d'une durée prédéfinie et subdivisé en des premier et second sous-intervalles de durées prédéfinies, et en ce que ledit modulateur est configuré pour imposer une amplitude de modulation nulle pendant toute la durée de chaque intervalle de temps hormis pendant des premier et second instants prédéfinis appartenant respectivement auxdits premier et second sous-intervalles et durant lesquels ladite amplitude de modulation est choisie de sorte que l'on obtienne une amplitude moyenne sur tout ledit intervalle de temps correspondant à la génération d'un unique photon ayant un premier état quantique.

4. Dispositif selon l'une des revendications 2 et 3, dans lequel ledit modulateur est associé à un atténuateur optique.

5. Dispositif selon l'une des revendications 1 à 4, dans lequel ledit transformateur (4) comprend un modulateur de phase configuré pour transformer une phase associée audit premier état quantique d'un photon en une autre phase associée audit second état quantique de ce même photon.

6. Dispositif selon la revendication 5, dans lequel que ledit modulateur de phase est configuré pour induire, entre lesdits premier et second sous-intervalles de temps prédéfinis, au moins une différence de phase nulle pour un second état quantique correspondant à une première unité d'information quantique |0〉, ou au moins une différence de phase égale à π pour un second état quantique correspondant à une seconde unité d'information quantique |1〉.

7. Dispositif selon l'une des revendications 1 à 6, dans lequel ledit décodeur (5) comprend un interféromètre (9) configuré pour recevoir chaque photon ayant ledit second état quantique et comprenant deux entrées et deux sorties et agencé de sorte que la sortie d'un photon soit déterminée par la différence de phase entre les deux entrées, et un détecteur de photon unique (10) couplé à au moins l'une desdites deux sorties dudit interféromètre (9).

8. Dispositif selon la revendication 7, dans lequel ledit interféromètre (9) comprend des premier (11) et deuxième (12) séparateurs de faisceaux optiques couplés entre eux par des première (14) et seconde (15) fibres optiques ayant respectivement des première et seconde longueurs différentes.

9. Dispositif selon la combinaison des revendications 3 et 8, dans lequel la différence entre lesdites première et seconde longueurs est égale à une distance parcourue par un photon pendant ladite durée prédéfinie d'un intervalle de temps.

10. Dispositif selon l'une des revendications 8 et 9, dans lequel ledit interféromètre (9) est couplé audit détecteur de photon unique (10) par l'intermédiaire d'un troisième séparateur de faisceaux optiques (13) relié audit interféromètre (9) par des troisième (17) et quatrième (18) fibres optiques ayant respectivement des troisième et quatrième longueurs différentes et configurées pour délivrer une combinaison de signaux optiques délivrés sur deux sorties dudit deuxième séparateur de faisceaux optiques de l'interféromètre.

11. Dispositif selon la combinaison des revendications 3 et 10, dans lequel la différence entre lesdites troisième et quatrième longueurs est égale à une distance parcourue par un photon pendant la durée prédéfinie d'un sous-intervalle de temps.

12. Procédé de configuration, comprenant une étape dans laquelle on configure un dispositif de traitement (1) selon l'une des revendications précédentes de sorte que :
- soit la sortie dudit encodeur (3) soit couplée à l'entrée dudit transformateur (4) et la sortie de ce dernier (4) soit couplée à l'entrée dudit décodeur (5), pour qu'il réalise une procédure de type préparer et mesurer,
- soit la sortie dudit encodeur (3) soit couplée à l'entrée dudit transformateur (4) et la sortie de ce dernier (4) soit couplée à l'entrée de ladite interface de sortie (6), pour qu'il réalise une procédure de type préparer et envoyer,
- soit la sortie de ladite interface d'entrée (2) soit couplée à l'entrée dudit transformateur (4) et la sortie de ce dernier (4) soit couplée à l'entrée dudit décodeur (5), pour qu'il réalise une procédure de type recevoir et mesurer,
- soit la sortie de ladite interface d'entrée (2) soit couplée à l'entrée dudit transformateur (4) et la sortie de ce dernier (4) soit couplée à l'entrée de ladite interface de sortie (6), pour qu'il réalise une procédure de type recevoir et envoyer.

13. Procédé de distribution d'une clé quantique comprenant :
- une première étape dans laquelle i) on configure un dispositif de traitement (1) selon l'une des revendications précédentes de sorte que la sortie dudit encodeur (3) soit couplée à l'entrée dudit transformateur (4) et la sortie de ce dernier (4) soit couplée à l'entrée dudit décodeur (5), ii) on configure ledit encodeur (3) de sorte qu'il délivre 2N photons ayant des premiers états correspondant respectivement à 2N unités d'information quantique, iii) on configure ledit transformateur (4) de sorte qu'il transforme le premier état de chaque photon, reçu dudit encodeur (3) via ledit aiguilleur (7), en un second état quantique résultant d'une superposition uniforme de première |0〉 et seconde |1〉 unités d'information quantique correspondant à une différence de phase de π/2, et iv) on détermine avec ledit décodeur (5), avec lesdits 2N photons reçus dudit transformateur (4) via ledit aiguilleur (7), une séquence de 2N signaux électriques correspondant chacun à une valeur choisie parmi 0 et 1, cette séquence étant subdivisée en deux sous-séquences de N signaux électriques notés respectivement xi et yi (avec i = 1 à N), et
- une seconde étape dans laquelle i) on configure ledit dispositif de traitement (1) de sorte que la sortie dudit encodeur (3) soit couplée à l'entrée dudit transformateur (4) et la sortie de ce dernier (4) soit couplée à l'entrée de ladite interface de sortie (6), ii) on alimente ledit encodeur (3) avec N signaux électriques afin qu'il génère à partir de ces N signaux électriques une séquence de N photons ayant un premier état quantique fixe, et on alimente ledit transformateur (4) avec lesdites deux sous-séquences xi et yi de sorte qu'il transforme le premier état quantique de chaque photon, reçu dudit encodeur (3) via ledit aiguilleur (7), en un second état quantique défini par une superposition desdites première |0〉 et seconde |1〉 unités d'information quantique correspondant à une différence de phase qui est fonction desdites valeurs de ces xi et yi, en vue de la transmission de ce photon par ladite interface de sortie (6).

14. Procédé selon la revendication 13, dans lequel dans ladite seconde étape on alimente ledit encodeur (3) avec lesdites deux sous-séquences de N signaux électriques afin qu'il génère à partir de chaque paire (i) de signaux électriques xi et yi un photon ayant un premier état quantique correspondant soit à ladite première unité d'information quantique |0〉 correspondant à une différence de phase de 0 en présence de deux signaux électriques xi=0 et yi=0, soit à ladite seconde unité d'information quantique |1〉 correspondant à une différence de phase de π en présence de deux signaux électriques xi=0 et yi=1, soit à une superposition uniforme desdites première |0〉 et seconde |1〉 unités d'information quantique correspondant à une différence de phase de π/2 en présence de deux signaux électriques xi=1 et yi=0, soit encore à une autre superposition uniforme desdites première |0〉 et seconde |1〉 unités d'information quantique correspondant à une différence de phase de -π/2 en présence de deux signaux électriques xi=1 et yi=1.

## Patentansprüche

1. Verarbeitungsvorrichtung (1), die i) eine Eingangsschnittstelle (2), die konfiguriert ist, Photonen zu empfangen, die erste Quantenzustände haben, ii) einen Encoder (3), der konfiguriert ist, ein Photon, das einen ersten festen Quantenzustand hat, ausgehend von einem empfangenen elektrischen Signal zu erzeugen, iii) einen Transformator (4), der konfiguriert ist, den ersten Quantenzustand eines Photons in einen zweiten Quantenzustand umzuwandeln, iv) einen Decoder (5), der konfiguriert ist, den zweiten Quantenzustand eines empfangenen Photons in ein elektrisches Signal umzuwandeln, und v) eine Ausgangsschnittstelle (6) enthält, die konfiguriert ist, Photonen zu liefern, die zweite Quantenzustände haben und zu übertragen sind, wobei die Verarbeitungsvorrichtung (1) außerdem eine Umlenkeinrichtung (7) enthält, die mindestens drei Eingänge enthält, die je mit Ausgängen der Eingangsschnittstelle (2), Encoder (3) und Transformator (4) verbunden sind, und mindestens drei Ausgänge enthält, die je mit Eingängen der Ausgangsschnittstelle (6), Decoder (5) und Transformator (4) verbunden sind, und mindestens einen ihrer Eingänge mit einem ihrer Ausgänge abhängig von einem empfangenen Befehl selektiv koppelt.

2. Vorrichtung nach Anspruch 1, wobei der Encoder (3) einen Laser, der konfiguriert ist, Photonen zu erzeugen, und einen Modulator enthält, der konfiguriert ist, auf die erzeugten Photonen einzuwirken, um ihre Amplitude zu modulieren.

3. Vorrichtung nach Anspruch 2, wobei der Encoder (3) konfiguriert ist, ein Photon zu erzeugen, das einen ersten festen Quantenzustand hat, ausgehend von jedem elektrischen Signal, das während eines Zeitintervalls vordefinierter Dauer und in erste und zweite vordefinierte Teilintervalle vordefinierter Dauer unterteilt empfangen wird, und dass der Modulator konfiguriert ist, eine Modulationsamplitude Null während der ganzen Dauer jedes Zeitintervalls außer während erster und zweiter vordefinierter Zeitpunkte vorzugeben, die je zu den ersten und zweiten Teilintervallen gehören, und während denen die Modulationsamplitude so gewählt wird, dass eine mittlere Amplitude über das ganze Zeitintervall erhalten wird, das der Erzeugung eines einzigen Photons mit einem ersten Quantenzustand entspricht.

4. Vorrichtung nach einem der Ansprüche 2 und 3, wobei der Modulator einem optischen Dämpfungsglied zugeordnet ist.

5. Vorrichtung nach einem der Ansprüche 1 bis 4, wobei der Transformator (4) einen Phasenmodulator enthält, der konfiguriert ist, eine dem ersten Quantenzustand eines Photons zugeordnete Phase in eine andere Phase umzuwandeln, die dem zweiten Quantenzustand dieses gleichen Photons zugeordnet ist.

6. Vorrichtung nach Anspruch 5, wobei der Phasenmodulator konfiguriert ist, zwischen den ersten und den zweiten vordefinierten Teilzeitintervallen mindestens eine Phasendifferenz Null für einen zweiten Quantenzustand, der einer ersten Quanteninformationseinheit |0〉 entspricht, oder mindestens eine Phasendifferenz gleich π für einen zweiten Quantenzustand zu induzieren, der einer zweiten Quanteninformationseinheit |1〉 entspricht.

7. Vorrichtung nach einem der Ansprüche 1 bis 6, wobei der Decoder (5) ein Interferometer (9), das konfiguriert ist, jedes Photon zu empfangen, das den zweiten Quantenzustand hat, und das zwei Eingänge und zwei Ausgänge enthält und so eingerichtet ist, dass der Ausgang eines Photons durch die Phasendifferenz zwischen den zwei Eingängen bestimmt wird, und einen einzigen Photonendetektor (10) enthält, der mit mindestens einem der zwei Ausgänge des Interferometers (9) gekoppelt ist.

8. Vorrichtung nach Anspruch 7, wobei das Interferometer (9) erste (11) und zweite (12) Separatoren optischer Strahlen enthält, die miteinander durch erste (14) und zweite (15) Lichtleitfasern gekoppelt sind, die erste bzw. zweite unterschiedliche Längen haben.

9. Vorrichtung nach der Kombination der Ansprüche 3 und 8, wobei die Differenz zwischen der ersten und der zweiten Länge gleich einer von einem Photon während der vordefinierten Dauer eines Zeitintervalls durchlaufenen Strecke ist.

10. Vorrichtung nach einem der Ansprüche 8 und 9, wobei das Interferometer (9) mit dem einzigen Photonendetektor (10) mittels eines dritten Separators optischer Strahlen (13) gekoppelt ist, der mit dem Interferometer (9) durch dritte (17) und vierte (18) Lichtleitfasern verbunden ist, die je dritte und vierte unterschiedliche Längen haben und konfiguriert sind, eine Kombination optischer Signale zu liefern, die an zwei Ausgängen des zweiten Separators optischer Strahlen des Interferometers geliefert werden.

11. Vorrichtung nach der Kombination der Ansprüche 3 und 10, wobei die Differenz zwischen den dritten und vierten Längen gleich einer von einem Photon während der vordefinierten Dauer eines Teilzeitintervalls durchlaufenen Strecke ist.

12. Konfigurationsverfahren, das einen Schritt enthält, während dessen eine Verarbeitungsvorrichtung (1) nach einem der vorhergehenden Ansprüche so konfiguriert wird, dass:
- entweder der Ausgang des Encoders (3) mit dem Eingang des Transformators (4) gekoppelt und der Ausgang dieses letzteren (4) mit dem Eingang des Decoders (5) gekoppelt ist, damit er eine Prozedur der Art Vorbereiten und Messen durchführt,
- oder der Ausgang des Encoders (3) mit dem Eingang des Transformators (4) gekoppelt und der Ausgang dieses letzteren (4) mit dem Eingang der Ausgangsschnittstelle (6) gekoppelt ist, damit er eine Prozedur der Art Vorbereiten und Senden durchführt,
- oder der Ausgang der Eingangsschnittstelle (2) mit dem Eingang des Transformators (4) gekoppelt und der Ausgang dieses letzteren (4) mit dem Eingang des Decoders (5) gekoppelt ist, damit er eine Prozedur der Art Empfangen und Messen durchführt,
- oder der Ausgang der Eingangsschnittstelle (2) mit dem Eingang des Transformators (4) gekoppelt und der Ausgang dieses letzteren (4) mit dem Eingang der Ausgangsschnittstelle (6) gekoppelt ist, damit er eine Prozedur der Art Empfangen und Senden durchführt.

13. Verfahren zur Ausgabe eines Quantenschlüssels, das enthält:
- einen ersten Schritt, in dem i) eine Verarbeitungsvorrichtung (1) nach einem der vorhergehenden Ansprüche so konfiguriert wird, dass der Ausgang des Encoders (3) mit dem Eingang des Transformators (4) gekoppelt und der Ausgang dieses letzteren (4) mit dem Eingang des Decoders (5) gekoppelt wird, ii) der Encoder (3) so konfiguriert wird, dass er 2N Photonen liefert, die erste Zustände haben, die je 2N Quanteninformationseinheiten entsprechen, iii) der Transformator (4) so konfiguriert wird, dass er den ersten Zustand jedes Photons, das vom Encoder (3) über die Umlenkeinrichtung (7) empfangen wird, in einen zweiten Quantenzustand umwandelt, der aus einer gleichmäßigen Überlagerung erster |0〉 und zweiter |1〉 Quanteninformationseinheiten entsprechend einer Phasendifferenz von n/2 resultiert, und iv) mit dem Decoder (5) mit den vom Transformator (4) über die Umlenkeinrichtung (7) empfangenen 2N Photonen eine Folge von 2N elektrischen Signalen bestimmt wird, die je einem aus 0 und 1 ausgewählten Wert entsprechen, wobei diese Folge in zwei Teilfolgen von N elektrischen Signalen unterteilt ist, die je mit xi und yi bezeichnet sind (mit i = 1 bis N), und
- einen zweiten Schritt, in dem i) die Verarbeitungsvorrichtung (1) so konfiguriert wird, dass der Ausgang des Encoders (3) mit dem Eingang des Transformators (4) gekoppelt und der Ausgang dieses letzteren (4) mit dem Eingang der Ausgangsschnittstelle (6) gekoppelt wird, ii) der Encoder (3) mit N elektrischen Signalen gespeist wird, damit er ausgehend von diesen N elektrischen Signalen eine Folge von N Photonen erzeugt, die einen festen ersten Quantenzustand haben, und der Transformator (4) mit den zwei Teilfolgen xi und yi gespeist wird, damit er den ersten Quantenzustand jedes Photons, vom Encoder (3) über die Umlenkeinrichtung (7) empfangen, in einen zweiten Quantenzustand umwandelt, der durch eine Überlagerung der ersten |0〉 und zweiten |1〉 Quanteninformationseinheiten entsprechend einer Phasendifferenz definiert wird, die von den Werten dieser xi und yi abhängt, mit dem Ziel der Übertragung dieses Photons durch die Ausgangsschnittstelle (6).

14. Verfahren nach Anspruch 13, wobei im zweiten Schritt der Encoder (3) mit den zwei Teilfolgen von N elektrischen Signalen gespeist wird, damit er ausgehend von jedem Paar (i) elektrischer Signale xi und yi ein Photon erzeugt, das einen ersten Quantenzustand hat, der entweder der ersten Quanteninformationseinheit |0〉 entsprechend einer Phasendifferenz von 0 in Gegenwart von zwei elektrischen Signalen xi=0 und yi=0, oder der zweiten Quanteninformationseinheit |1〉 entsprechend einer Phasendifferenz von π in Gegenwart von zwei elektrischen Signalen xi=0 und yi=1, oder einer gleichmäßigen Überlagerung der ersten |0〉 und zweiten |1〉 Quanteninformationseinheiten entsprechend einer Phasendifferenz von π/2 in Gegenwart von zwei elektrischen Signalen xi=1 und yi=0, oder auch einer anderen gleichmäßigen Überlagerung der ersten |0〉 und zweiten |1〉 Quanteninformationseinheiten entsprechend einer Phasendifferenz von -π/2 in Gegenwart von zwei elektrischen Signalen xi=1 und yi=1 entspricht.

## Claims

1. Processing device (1) comprising i) an input interface (2) configured to receive photons having first quantum states, ii) an encoder (3) configured to generate a photon having a first fixed quantum state from a received electrical signal, iii) a transformer (4) configured to transform said first quantum state of a photon into a second quantum state, iv) a decoder (5) configured to transform said second quantum state of a received photon into an electrical signal, and v) an output interface (6) configured to deliver photons having second quantum states and to be transmitted, said processing device (1) also comprising a switcher (7) comprising at least three inputs connected respectively to outputs of said input interface (2), encoder (3) and transformer (4), and at least three outputs connected respectively to inputs of said output interface (6), decoder (5) and transformer (4), and selectively coupling at least one of its inputs to one of its outputs according to a received command.

2. Device according to Claim 1, wherein said encoder (3) comprises a laser configured to generate photons and a modulator configured to act on said generated photons in order to modulate their amplitude.

3. Device according to Claim 2, wherein said encoder (3) is configured to generate a photon having a first fixed quantum state from each electrical signal received during a time interval of a predefined duration and subdivided into first and second subintervals of predefined durations, and in that said modulator is configured to impose a zero modulation amplitude throughout the duration of each time interval except during the first and second predefined instants belonging respectively to said first and second subintervals and during which said modulation amplitude is chosen so that an average amplitude is obtained over all of said time interval corresponding to the generation of a single photon having a first quantum state.

4. Device according to one of Claims 2 and 3, wherein said modulator is associated with an optical attenuator.

5. Device according to one of Claims 1 to 4, wherein said transformer (4) comprises a phase modulator configured to transform a phase associated with said first quantum state of a photon into another phase associated with said second quantum state of this same photon.

6. Device according to Claim 5, wherein said phase modulator is configured to induce, between said first and second predefined time subintervals, at least one zero phase difference for a second quantum state corresponding to a first quantum information unit |0〉, or at least one phase difference equal to π for a second quantum state corresponding to a second quantum information unit |1〉.

7. Device according to one of Claims 1 to 6, wherein said decoder (5) comprises an interferometer (9) configured to receive each photon having said second quantum state and comprising two inputs and two outputs and arranged so that the output of a photon is determined by the phase difference between the two inputs, and a single-photon detector (10) coupled to at least one of said two outputs of said interferometer (9).

8. Device according to Claim 7, wherein said interferometer (9) comprises first (11) and second (12) optical beam splitters coupled to one another by first (14) and second (15) optical fibers respectively having first and second different lengths.

9. Device according to the combination of Claims 3 and 8, wherein the difference between said first and second lengths is equal to a distance travelled by a photon during said predefined duration of a time interval.

10. Device according to one of Claims 8 and 9, wherein said interferometer (9) is coupled to said single-photon detector (10) via a third optical beam splitter (13) linked to said interferometer (9) by third (17) and fourth (18) optical fibers respectively having third and fourth different lengths and configured to deliver a combination of optical signals delivered on two outputs of said second optical beam splitter of the interferometer.

11. Device according to the combination of Claims 3 and 10, wherein the difference between said third and fourth lengths is equal to a distance travelled by a photon during the predefined duration of a time subinterval.

12. Configuration method, comprising a step in which a processing device (1) according to one of the preceding claims is configured so that:
- either the output of said encoder (3) is coupled to the input of said transformer (4) and the output thereof (4) is coupled to the input of said decoder (5), for it to perform a procedure of prepare and measure type,
- or the output of said encoder (3) is coupled to the input of said transformer (4) and the output thereof (4) is coupled to the input of said output interface (6), for it to perform a procedure of prepare and send type,
- or the output of said input interface (2) is coupled to the input of said transformer (4) and the output thereof (4) is coupled to the input of said decoder (5), for it to perform a procedure of receive and measure type,
- or the output of said input interface (2) is coupled to the input of said transformer (4) and the output thereof (4) is coupled to the input of said output interface (6), for it to perform a procedure of receive and send type.

13. Method for distributing a quantum key comprising:
- a first step in which i) a processing device (1) according to one of the preceding claims is configured so that the output of said encoder (3) is coupled to the input of said transformer (4) and the output thereof (4) is coupled to the input of said decoder (5), ii) said encoder (3) is configured so that it delivers 2N photons having first states corresponding respectively to 2N quantum information units, iii) said transformer (4) is configured so that it transforms the first state of each photon, received from said encoder (3) via said switcher (7), into a second quantum state resulting from a uniform superimposition of first |0〉 and second |1〉 quantum information units corresponding to a phase difference of n/2, and iv) said decoder (5) is used, with said 2N photons received from said transformer (4) via said switcher (7) to determine a sequence of 2N electrical signals each corresponding to a value chosen from 0 and 1, this sequence being subdivided into two subsequences of N electrical signals respectively denoted xi and yi (with i = 1 to N), and
- a second step in which i) said processing device (1) is configured so that the output of said encoder (3) is coupled to the input of said transformer (4) and the output thereof (4) is coupled to the input of said output interface (6), ii) said encoder (3) is supplied with N electrical signals in order for it to generate, from these N electrical signals, a sequence of N photons having a first fixed quantum state, and said transformer (4) is supplied with said two subsequences xi and yi so that it transforms the first quantum state of each photon, received from said encoder (3) via said switcher (7), into a second quantum state defined by a superimposition of said first |0〉 and second |1〉 quantum information units corresponding to a phase difference which is a function of said values of these xi and yi, with a view to the transmission of this photon by said output interface (6).

14. Method according to Claim 13, wherein, in said second step, said encoder (3) is supplied with said two subsequences of N electrical signals in order for it to generate, from each pair (i) of electrical signals xi and yi, a photon having a first quantum state corresponding either to said first quantum information unit |0〉 corresponding to a phase difference of 0 in the presence of two electrical signals xi = 0 and yi = 0, or to the second quantum information unit |1〉 corresponding to a phase difference of π in the presence of two electrical signals xi = 0 and yi = 1, or to a uniform superimposition of said first |0〉 and second |1〉 quantum information units corresponding to a phase difference of n/2 in the presence of two electrical signals xi = 1 and yi = 0, or even to another uniform superimposition of said first |0〉 and second |1〉 quantum information units corresponding to a phase difference of -n/2 in the presence of two electrical signals xi = 1 and yi = 1.
